# EUROPEAN PATENT APPLICATION

(11) **EP 4 368 668 A1**
(43) Date of publication of application: **15.05.2024**
(21) Application number: 22849442.3
(22) Date of filing: 25.07.2022
(51) Int. Cl.: C08L 23/00, C08L 23/12, C08L 67/02, C08L 67/04, C08L 101/16

(54) **RESIN COMPOSITION**

(30) Priority: 27.07.2021 JP 2021122430
(71) Applicant: Sumitomo Chemical Company, Limited, Tokyo 103-6020 (JP); Newlight Technologies, Inc., Huntington Beach CA 92647 (US)
(72) Inventor: CHIBA Shunsuke, Ichihara-shi, Chiba 299-0195 (JP); SANJO Haruhiko, Ichihara-shi, Chiba 299-0195 (JP); NAKAJIMA Hideaki, Ichihara-shi, Chiba 299-0195 (JP)
(74) Representative: Vossius & Partner Patentanwälte Rechtsanwälte mbB
(86) International application number: PCT/JP2022/028648
(87) International publication number: WO 2023/008381

(57) **Abstract**

A resin composition contains an olefin-based polymer A, a polymer B-1, and a polymer B-2. The polymer B-1 is a poly (3-hydroxyalkanoate) - based polymer having a melting point of 150 to 220 °C, and the polymer B-2 is an aromatic polyester having a melting point of 180 to 220 °C. A content of the olefin-based polymer A is 70 to 95 parts by mass, a content of the polymer B-1 is 1 to 15 parts by mass, and a content of the polymer B-2 is 1 to 25 parts by mass, with respect to 100 parts by mass of the total of the olefin-based polymer A, the polymer B-1, and the polymer B-2.

## Description

### Technical Field

The present invention relates to a resin composition.

### Background Art

Among thermoplastic resins, olefin-based polymers are inexpensive, lightweight, and excellent in properties such as molding processability, mechanical properties, heat resistance, and long-term heat resistance degradation. Therefore, olefin-based polymers are used in various containers such as bottles; packaging materials for foods; caps for containers; stationery; daily sundries; fibers for carpets and sofas; interior and exterior materials for automobiles; electrical and electronic equipment parts; and building materials such as interior materials for buildings and houses. In recent years, these articles are often required to be improved in airtightness, coatability, dyeability, and the like.

Therefore, as one means for meeting these requirements, as described in Patent Literature 1, a method of blending a thermoplastic polyester represented by polyethylene terephthalate and polybutylene terephthalate, which is more excellent in airtightness, coatability, and dyeability than an olefin-based polymer, into an olefin-based polymer can be considered.

### Citation List

### Patent Literature

Patent Literature 1: JP2008-261070A

### Summary of The Invention

### Technical Problem

However, the compatibility between a olefin-based polymer and a thermoplastic polyester is poor. Therefore, even when a composition containing an olefin-based polymer and a thermoplastic polyester that have been sufficiently melt-kneaded is subjected to a dyeing process using a disperse dye, it is difficult to efficiently dye the composition due to phase separation between the olefin-based polymer and the thermoplastic polyester.

The present invention has been made in view of the above problems, and an object thereof is to provide a resin composition containing an olefin-based polymer and a thermoplastic polyester, and having excellent dyeability.

### Solution to Problem

One aspect of the present invention is a resin composition comprising an olefin-based polymer A, a polymer B-1, and a polymer B-2,
wherein the polymer B-1 is a poly (3-hydroxyalkanoate)-based polymer having a melting point of 150 °C to 220 °C,
the polymer B-2 is an aromatic polyester having a melting point of 180 to 220 °C, and
a content of the olefin-based polymer A is 70 to 95 parts by mass, a content of the polymer B-1 is 1 to 15 parts by mass, and a content of the polymer B-2 is 1 to 25 parts by mass, with respect to a total of 100 parts by mass of the olefin-based polymer A, the polymer B-1, and the polymer B-2.

In the resin composition, the content of the olefin-based polymer A can be 80 to 90 parts by mass, the content of the polymer B-1 can be 1 to 10 parts by mass, and the content of the polymer B-2 can be 1 to 20 parts by mass, with respect to the total of 100 parts by mass of the olefin-based polymer A, the polymer B-1, and the polymer B-2.

The olefin-based polymer A may be a propylene homopolymer.

The polymer B-1 may comprise a structural unit of 3-hydroxybutyrate.

The polymer B-1 may comprise a structural unit of 3-hydroxybutyrate in an amount of 50 mol% or more with respect to a total structural units (100 mol%) of hydroxyalkanoate.

### Advantageous Effects of Invention

According to the present invention, there is provided a resin composition containing an olefin-based polymer and a thermoplastic polyester, and having excellent dyeability.

### Description of Embodiments

Hereinafter, some embodiments of the present invention will be described in detail. However, the present invention is not limited to the following embodiments.

A resin composition according to the present invention comprises an olefin-based polymer A, a polymer B-1, and a polymer B-2.

### <Olefin-based Polymer A>

The olefin-based polymer A is a polymer containing 50% by mass or more of a structural unit derived from an olefin having a carbon atom number of 2 or more and 10 or less (provided that the total amount of the olefin-based polymer is 100% by mass). Examples of the olefin having a carbon atom number of 2 or more and 10 or less include ethylene, propylene, 1-butene, 4-methyl-1-pentene, 1-hexene, 1-octene, and 1-decene.

The olefin-based polymer A may contain a structural unit derived from a monomer other than an olefin having a carbon atom number of 2 or more and 10 or less. Examples of monomers other than olefins having a carbon atom number of 2 or more and 10 or less include aromatic vinyl monomers such as styrene ; unsaturated carboxylic acids such as acrylic acids and methacrylic acids; unsaturated carboxylic esters such as methyl acrylate, ethyl acrylate, butyl acrylate, methyl methacrylate and ethyl methacrylate ; vinyl ester compounds such as vinyl acetate ; conjugated dienes such as 1, 3-butadiene and 2-methyl-1, 3-butadiene (isoprene) ; and non-conjugated dienes such as dicyclopentadiene and 5-ethylidene-2-norbomene.

The olefin-based polymer A may be at least one selected from the group consisting of an ethylene-based polymer, a propylene-based polymer, and a butene-based polymer, and may be a combination of any two or more thereof.

The ethylene-based copolymer is a polymer containing 50% by mass or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based copolymer may be a combination of two or more ethylene-based copolymers.

The propylene-based copolymer is a polymer containing 50% by mass or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based copolymer may be a combination of two or more propylene-based copolymers. It is preferable that the olefin-based polymer A is a propylene-based copolymer.

The butene-based copolymer is a polymer containing 50% by mass or more of a structural unit derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. The butene-based copolymer may be a combination of two or more types of butene-based copolymers.

The olefin-based polymer may be one type of polymer or a mixture of two or more types of polymers.

The melt mass flow rate (MFR) of the olefin-based polymer A measured in accordance with JIS K7210 2014 under conditions of a temperature of 230 °C or 190 °C and a load of 2.16kgf is preferably 0. 1g /10 minutes or more and 200g/10 minutes or less.

The melting point of the olefin-based polymer A may be 110 to 180 °C.

The above-mentioned olefin-based polymer A can be produced by a known polymerization method using a known polymerization catalyst.

The olefin-based polymer A is preferably a propylene homopolymer. The propylene homopolymer is a polymer composed of only constitutional units derived from propylene.

The melt mass flow rate of the propylene homopolymer measured under conditions of a temperature of 230 °C and a load of 2. 16kgf may be 0.1g/10 minutes or more, 1g/10 minutes or more, 3g/10 minutes or more, or 5g/10 minutes or more from the viewpoint of processability. The melt mass flow rate can be 80g/10 minutes or less, 60g/10 minutes or less, 50g/10 minutes or less, 30g/10 minutes or less, 20g/10 minutes or less. The melt mass flow rate of the propylene homopolymer is determined in accordance with JIS K 7210 - 2014.

The propylene homopolymer may be a propylene homopolymer having an isotactic structure. The phrase "having an isotactic structure" refers to an isotactic pentad fraction (hereinafter, also referred to [mmmm]) measured using 13C-NMR) is 0.85 or more. The [mmmm] is preferably 0.90 or more, and can be 0.95 or more, 0.96 or more, and 0.97 or more. The [mmmm] may be 0.99 or less.

Here, the isotactic pentad ratio indicates an existence ratio of an isotactic chain in a pentad unit in molecular chains measured using 13C-NMR, and is a ratio of a constitutional unit derived from propylene at the center of a chain in which five constitutional units derived from propylene are continuously meso-bonded. The fraction is a value calculated as a ratio of the [mmmm] peak in all absorption peaks in the methyl carbon region observed in the 13C NMR spectrum. The [mmmm] peak is a peak derived from propylene at the center of five continuous meso-bonded chains.

The [mmmm] can be determined according to the method described in the report of A. Zambelli et al. (Macromolecules, 1973, 6).

The propylene homopolymer can be produced by a known polymerization method using a catalyst system formed by contacting a known solid titanium catalyst, an organometallic compound catalyst, and optionally an electron-donor; a catalyst system formed by contacting a cyclopentadienyl ring-containing transition metal compound of the fourth group of the periodic table and an alkylaluminoxane; and a catalyst system formed by contacting a cyclopentadienyl ring-containing transition metal compound of the fourth group of the periodic table, a compound that reacts with the transition metal compound to form an ionic complex, and an organoaluminum compound.

### <Polymer B-1>

The polymer B-1 is a poly (3-hydroxyalkanoate) - based polymer having a melting point of 150 to 220 °C.

The poly (3-hydroxyalkanoate)-based polymer is a polyhydroxyalkanoate, that is, a polyester of a hydroxyalkanoic acid, and necessarily contains a constituent unit of a 3-hydroxyalkanoate represented by the formula (1). In the formula (1), R is a hydrogen atom, a halogen atom, alkyl groups having a carbon atom number of 1 to 15, cyano groups, amino groups having a carbon atom number of 1 to 18, alkoxy groups (alkyloxy groups) having a carbon atom number of 1 to 11, amide groups having a carbon atom number of 1 to 20, aryl groups having a carbon atom number of 6 to 12, or monovalent heterocyclic groups having a carbon atom number of 1 to 9. These groups may have a substituent. In particular, from the viewpoint of compatibility with components (for example, the olefin-based polymer A) other than the polymer B-1 contained in the composition, R is preferably alkyl groups having a carbon atom number of 1 to 8, amide groups having a carbon atom number of 1 to 20, or aryl groups having a carbon atom number of 6 to 8.

[-O-CHR-CH₂-CO-] (1)

Examples of halogen atoms are F, Cl, Br, and I.

The alkyl groups having a carbon atom number of 1 to 15 may be linear or branched. The number of carbon atom a carbon number of 1 to 8, and more preferably 1 to 4. Examples of alkyl groups are methyl, ethyl, propyl, isopropyl, butyl, isobutyl, sec-butyl, tert-butyl, pentyl, isopentyl, 2-methylbutyl, 1-methylbutyl, hexyl, isohexyl, 3-methylpentyl, 2-methylpentyl, 1-methylpentyl, heptyl, octyl, isooctyl, 2-ethylhexyl, 3, 7-dimethyloctyl, nonyl, decyl, undecyl, dodecyl, tetradecyl, and pentadecyl groups.

Examples of the amino groups having 1 to 18 carbon atoms include amino, alkylamino, dialkylamino, arylamino, alkylarylamino, benzylamino, and dibenzylamino groups.

Examples of alkylamino groups are methylamino, ethylamino, propylamino, butylamino, pentylamino, hexylamino, heptylamino, octylamino, nonylamino, decylamino, dodecylamino, isopropylamino, isobutylamino, isopentylamino, sec-butylamino, tert-butylamino, secpentylamino, tert-pentylamino, tert-octylamino, neopentylamino, cyclopropylamino, cyclobutylamino, cyclopentylamino, cyclohexylamino, cycloheptylamino, cyclooctylamino, 1-adamantamino and 2-adamantamino groups.

Examples of dialkylamino groups are dimethylamino, diethylamino, dipropylamino, dibutylamino, dipentylamino, diisopropylamino, diisobutylamino, diisopentylamino, methylethylamino, methylpropylamino, methylbutylamino, methylisobutylamino, dicyclopropylamino, pyrrolidino, piperidino and piperazino groups.

Examples of the arylamino group include anilino, 1-naphthylamino, 2-naphthylamino, o-toluidino, m-toluidino, p-toluidino, 1-fluoreneamino, 2-fluoreneamino, 2-thiazoleamino and p-terphenylamino groups.

Examples of the alkylarylamino group include N-methylanilino group, N-ethylanilino group, N-propylanilino group, N-butylanilino group, N-isopropylanilino group and N-pentylanilino groups.

Examples of the alkoxy group having 1 to 11 carbon atoms include methoxy, ethoxy, propoxy, isopropoxy, butoxy, isobutoxy, secbutoxy, tert-butoxy, cyclopropoxy, cyclobutoxy, and cyclopentoxy groups.

The "amide group" means a group obtained by removing one hydrogen atom bonded to a nitrogen atom from a carboxylic amide. Examples of the amide group having 1 to 20 carbon atom include a group represented by -NH-C(= O)-R^{A} (wherein R^{A} is a hydrogen atom or a monovalent organic group) such as formamido, acetamido, propionamido, butyramido, benzamido, trifluoroacetamido and pentafluorobenzamido groups; and a group represented by -N(-C(= O)-R^{A})(-C(= O)-R^{B}) (wherein R^{A} and R^{B} are each independently a hydrogen atom or a monovalent organic group) such as diformamido, diacetamido, dipropioamido, dibutylamido, dibenzamido, ditrifluoroacetamido and dipentafluorobenzamido groups. The organic groups may be alkyl, alkoxy or aryl groups, optionally substituted with a halogen atom. Among them, the amide group is preferably formamide, acetamide, propionamide, butyroamide, or benzamide groups.

Examples of aryl groups having 6 to 12 carbon atoms include phenyl, tolyl, xylyl, naphthyl, and biphenyl groups. Among these, phenyl, tolyl, and xylyl groups are preferable.

Examples of the hetero atom of the monovalent heterocyclic group having 1 to 9 carbon atoms include N, O, and S, which may be saturated or unsaturated, and the heterocyclic group may have a single hetero atom or a plurality of hetero atoms, or may have hetero heteroatoms of different types. Examples of such heterocyclic groups include thienyl, pyrrolyl, furyl, pyridyl, piperidinyl, quinolinyl, isoquinolinyl, pyrimidinyl, triazinyl, and thiazolyl groups.

The structural unit of the polymer B-1 may consist of only one or more kinds of 3-hydroxyalkanoates represented by the formula (1); or may have one or more kinds of 3-hydroxyalkanoates represented by the formula (1) and one or more kinds of other hydroxyalkanoates.

The polymer B-1 preferably contains the structural unit of 3-hydroxyalkanoate represented by the formula (1) in an amount of 50 mol% or more, more preferably 70 mol% or more, with respect to the total structural units (100 mol%) of hydroxyalkanoate.

When R is hydrogen atom or CₙH_{2n + 1} and n is an integer of 1 to 15, examples of the 3-hydroxyalkanoate represented by the formula (1) include 3-hydroxybutyrate where n = 1 (hereinafter sometimes referred to as 3HB), 3-hydroxyvalerate where n = 2 (hereinafter sometimes referred to as 3HV), 3-hydroxyhexanoate where n = 3 (hereinafter sometimes referred to as 3HH), 3-hydroxyoctanoate where n = 5, 3-hydroxyoctadecanoate where n = 15, and 3-hydroxypropionate where R is hydrogen atom.

An example of the polymer B-1 having only one type of structural unit represented by the formula (1) is poly (3-hydroxybutyrate) (hereinafter sometimes referred to as P3HB).

An example of the polymer B-1 having only a plurality of types of structural unit represented by the formula (1) is poly (3-hydroxybutyrate-co-3-hydroxyhexanoate) (hereinafter sometimes referred to as P3HB3HH), poly (3-hydroxybutyrate-co-3-hydroxyvalerate) (hereinafter sometimes referred to as "P3HB3HV"), and poly (3-hydroxybutyrate-co-3-hydroxypropionate) (hereinafter sometimes referred to as "P3HB3HP").

Examples of the hydroxyalkanoate other than the 3-hydroxyalkanoate represented by the formula (1) include a structural unit represented by the formula (2), wherein R¹ is a hydrogen atom or an alkyl group represented by CₙH_{2n + 1}, n is an integer of 1 or more and 15 or less, and m is an integer of 2 to 10.

[-O-CHR¹-CₘH_{2m + 1}-CO-] (2)

An example of the polymer B-1 including the constituent unit of the formula (1) and the formula (2) is poly (3-hydroxybutyrate-co-4-hydroxybutyrate) (for example, the following formula (P3HB4HB)).

From the viewpoint of increasing the melting point, the structural unit of the polymer B-1 preferably contains at least 3-hydroxybutyrate among the 3-hydroxyalkanoates represented by the formula (1).

The polymer B-1 preferably contains a structural unit of 3-hydroxybutyrate in an amount of 50 mol% or more, more preferably 70 mol% or more, with respect to the total structural units (100 mol%) of the hydroxyalkanoate.

The polymer B-1 may have two or more kinds of ester constituent units, and may be, for example, a di-polymer having two kinds of constituent units as described above, a tri-copolymer having three kinds of constituent units, and a tetra-copolymer having four kinds of constituent units.

For example, an example of a tri-copolymer is poly (3-hydroxybutyrate-co-3-hydroxyvalerate-co-3-hydroxyhexanoate) (hereinafter sometimes referred to as (P3HB3HV3HH)).

As described above, the polymer B-1 preferably contains 3-hydroxybutyrate among the constituent units of 3-hydroxyalkanoate represented by the formula (1). The proportion XX of the structural unit of 3-hydroxybutyrate is preferably 90 mol% or more, more preferably 95 mol% or more, and even more preferably 98.0 mol% or more with respect to 100 mol of all ester structural units of hydroxyalkanoates.

The proportion XX is typically 100 mol% or less, preferably 99.9 mol% or less, and more preferably 99.8 mol% or less.

The arrangement mode of the copolymer may be any mode such as a random copolymer, an alternative copolymer, a block copolymer, or a graft copolymer.

The polymer B-1 may contain an ester structural unit other than those represented by the formulae (1) and (2), but the main chain of the other ester structural unit does not contain an aromatic hydrocarbon structure. That is, the polymer B-1 is an aliphatic polyester. However, it is possible that a group having an aromatic hydrocarbon group is bonded to a carbon of the main chain of the other ester structural unit.

As described in L. Tripathi., M. C Factories, 1144 (2012), the constituent ratio of the constituent unit in the polymer B-1 can be determined by calculation from the results of NMR measurement such as 1H NMR and 13C NMR.

The polymer B-1 may be a blend (mixture) of two or more poly (3-hydroxyalkanoate) - based polymers.

The weight average molecular weight (Mw) of the polymer B-1 can be 10,000 to 1,000,000, is preferably 20000 to 800000, and is more preferably 30000 to 600000. When the weight-average molecular weight (Mw) is 10,000 or more, a molded article having excellent impact strength and tensile elongation can be obtained. In addition, when the weight average molecular weight is 500000 or less, the dispersibility in the olefin-based polymer A becomes good. The weight average molecular weight may be 400000 or less, 300000 or less, or 200000 or less. In the present specification, the weight average molecular weight (Mw) is measured by GPC using standard polystyrene as a molecular weight standard substance.

It is preferable that the polymer B-1 is a thermoplastic resin and is crystalline.

The melt mass flow rate (MFR (B-1)) of the polymer B-1 measured under conditions of a temperature of 190 °C. and a load of 2. 16kgf in accordance with JIS K7210 2014 is preferably 0.1g/10 min or more and 200g/10 min or less. The MFR (B-1) may be 1g/10 min or more, 3g/10 min or more, or 5g/10 min or more. The MFR (B-1) may be 7g/10 min or more, 8g/10 min or more, 10g/10 min or more, or 20g/10 min or more. MFR (B) may be 150g/10 min or less, or may be 100g / 10 min or less.

The melting point (Tm) of the polymer B-1 is 150 °C or higher, and may be 155 °C or higher, 160 °C or higher, 165 °C or higher, 170 °C or higher, or 175 °C or higher. The melting point (Tm) of the polymer B-1 is 220 °C or lower, may be 210 °C or lower, may be 200 °C or lower, or may be 190 °C or lower.

The melting point (Tm) of each polymer in the present specification is measured by the position of a main peak based on the melting of crystals obtained by differential scanning calorimetry (DSC) measurement in accordance with JIS K7121.

The poly (3-hydroxyalkanoate)-based polymer may be produced by a microorganism or may be derived from a compound derived from petroleum or a plant raw material (for example, cyclic lactone).

In the poly (3-hydroxyalkanoate) - based polymer, each structural unit of the hydroxyalkanoate may be composed of only the D-form (R-form) as in a polymer produced from a microorganism, or may contain both the D-form (R-form) and the L-form (S-form) as in a polymer derived from a mixture of the D-form (R-form) and the L-form (S-form).

In the poly (3-hydroxyalkanoate)-based polymer produced from a microorganism, the structural unit of formula (1) can be represented by the following formula. In the formula (BI-1), n represents the degree of polymerization.

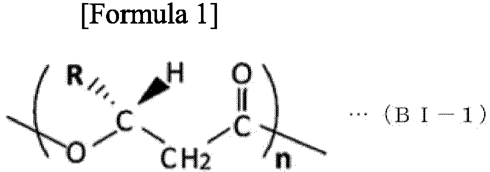

For example, poly - (3-hydroxybutyrate) produced from a microorganism has the following structure. In the formula (BI-2), n represents the degree of polymerization.

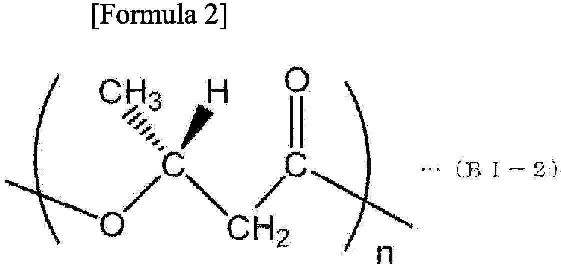

Poly - (3-hydroxybutyrate-co-3-hydroxyhexanoate) produced from a microorganism has the following structure. In the formula (BI-3), m and n represent the degree of polymerization.

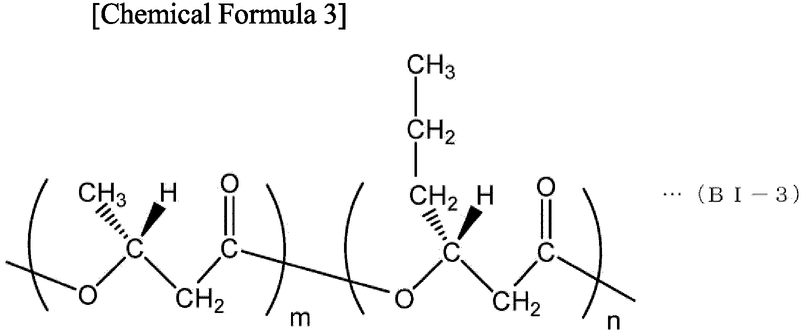

Poly - (3-hydroxybutyrate-co-4-hydroxybutyrate) produced from microorganisms has the following structure. In the formula (BI-4), m and n represent the degree of polymerization.

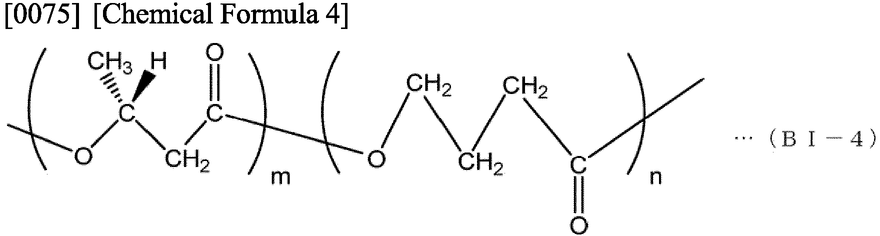

The polymer B-1 can be biodegradable.

For example, poly (3-hydroxyalkanoate) - based polymers can be produced by microorganisms such as Alcaligenes eutrophus AC32 strains obtained by introducing PHA synthase genes derived from Aeromonascaviae into Alcaligenes eutrophus (International Deposit under the Budapest Treaty, International Depository Authority : International Patent Organism Depositary, National Institute of Advanced Industrial Science and Technology (Central 6, 1-1-1, Higashi, Tsukuba, Ibaraki, Japan), Original Deposit Date: Aug. 12, 1996, and transferred on Aug. 7, 1997, Deposit Number FERMBP - 6038 (transferred from original deposit FERM P - 15786)) (J. Bacteriol., 1794821 (1997)).

### <Polymer B-2>

The polymer B-2 of the present embodiment is an aromatic polyester having a melting point of 180 to 220 °C. The aromatic polyester is a polymer having an aromatic hydrocarbon structure (aromatic ring) and an ester bond in the main chain.

The polymer B-2 can be a polycondensate of a polycarboxylic acid and a polyol (polyhydroxy compound). The polycarboxylic acid refers to an organic compound having a plurality of carboxyl groups or a derivative thereof (for example, an acid anhydride or an ester). The polyol (polyhydroxy compound) refers to an organic compound having a plurality of hydroxyl groups.

In the polymer B-2, the main chain of the structural unit derived from a polycarboxylic acid may have an aromatic ring, the main chain of the structural unit derived from a polyol may have an aromatic ring, and both of the main chains of the structural unit derived from a polycarboxylic acid and the structural unit derived from a polyol may have an aromatic ring.

From the viewpoint of lowering the melting point, it is preferable that the constituent unit derived from the polycarboxylic acid has an aromatic ring in the main chain and the constituent unit derived from the polyol does not have an aromatic ring in the main chain. The polyol-derived constituent unit is more preferably aliphatic. Aliphatics include those containing an oxygen atom.

When the main chain of the structural unit derived from a polycarboxylic acid has an aromatic ring, examples of the polycarboxylic acid include terephthalic acid, isophthalic acid, orthophthalic acid, 2, 6-naphthalenedicarboxylic acid, diphenyl ether 4,4' - dicarboxylic acid, trimellitic acid, trimellitic acid, and derivatives thereof.

It is preferable that the polycarboxylic acid includes terephthalic acid. The ratio of the number of moles of the structural unit derived from a polycarboxylic acid other than terephthalic to the number of moles of the structural unit derived from all acid components may be 10mol% or less, 5mol% or less, 1mol% or less, or 0.5mol% or less.

When the polycarboxylic acid contains terephthalic acid, the polycarboxylic acid may contain other polycarboxylic acid components in addition to terephthalic acid.

Examples of other polycarboxylic acid components are the above-mentioned aromatic polycarboxylic acids other than terephthalic acid, and aliphatic polycarboxylic acids such as adipic acid, sebacic acid, succinic acid, dimer acid, 1, 4-cyclohexadicarboxylic acid, and derivatives thereof.

When the constituent unit derived from the polyol is aliphatic, examples of the polyol include aliphatic polyols such as ethylene glycol, 2, 2-dimethyl-1, 3-propanediol (neopentyl glycol), 1, 3-propanediol, 2-methyl-1, 3-propanediol, 2-butyl-2-ethyl-1, 3-propanediol, 1, 2-propanediol, 1, 4-butanediol, 1, 3-butanediol, diethylene glycol, 1, 4-cyclohexanediol, and 1, 4-cyclohexanedimethanol.

Any one of the polyols may be added alone, or two or more thereof may be added in an arbitrary ratio.

Among the aliphatic polyols, a mixture of ethylene glycol and an aliphatic polyol having a chain length longer than that of ethylene glycol is preferable from the viewpoint of lowering the melting point. Examples of polyols having a chain length longer than that of ethylene glycol are aliphatic polyols such as 2, 2-dimethyl-1, 3-propanediol (neopentyl glycol), 1, 3-propanediol, 2-methyl-1, 3-propanediol, 2-butyl-2-ethyl-1, 3-propanediol, 1, 4-butanediol, 1, 3-butanediol, diethylene glycol, 1, 4-cyclohexanediol, and 1, 4-cyclohexanedimethanol.

The chain lengths are the lengths of the atom chains between the OH groups. The aliphatic polyol having a chain length longer than that of ethylene glycol may be only one kind or may be a mixture of a plurality of kinds.

The amount of the constituent unit derived from ethylene glycol is preferably 10mol% or more with respect to the total amount of the constituent unit derived from polyols. The amount of the ethylene glycolderived constituent unit may be 20mol% or more, 30mol% or more, 40mol% or more, or 45mol% or more with respect to the total amount of the polyol-derived constituent unit.

The amount of the polyol-derived structural unit having a chain-length longer than that of ethylene glycol is preferably 27mol% or more with respect to the total amount of the polyol-derived constituent unit. By including a polyol component having a chain length longer than that of ethylene glycol, the melting point of the polymer B-2 can be lowered. The amount of the polyol-derived constituent unit having a chain-length longer than that of ethylene glycol may be 30mol% or more, 35mol% or more, or 40mol% or more, and may be 55mol% or less, 52mol% or less, 50mol% or less, or 45mol% or less with respect to the total amount of the polyol-derived constituent unit.

In particular, the polymer B-2 preferably contains a structural unit derived from ethylene glycol and 2, 2-dimethyl-1, 3-propanediol (neopentyl glycol) as a structural unit derived from an aliphatic polyol.

The content of the structural unit derived from neopentyl glycol is preferably 27mol% or more, more preferably 30mol% or more, even more preferably 35mol% or more, and still more preferably 40mol% or more, based on the total amount of the structural unit derived from polyols. When the content is 25mol% or less, the molding temperature of the composition exceeds 200 °C. The content of the structural unit derived from neopentyl glycol is preferably 55mol% or less, more preferably 52mol% or less, even more preferably 50mol% or less, and still more preferably 45mol% or less, based on the total amount of the structural unit derived from polyols. If the content exceeds 55mol%, sufficient mechanical properties may not be obtained.

In the aromatic polyester, when the constitutional unit derived from the polycarboxylic acid has an aromatic ring in the main chain and the constitutional unit derived from the polyhydroxy compound also has an aromatic ring in the main chain, examples of the polyhydroxy compound having an aromatic ring in the main chain include hydroquinone, 4,4 ' - dihydroxybiphenyl, and bisphenol A.

The polymer B-2 may be a polycondensation product of a monomer containing no polycarboxylic acid. For example, the polymer B-2 may be a polycondensate of an aromatic hydroxycarboxylic acid in which two H of an aromatic ring are substituted with a hydroxy group and a carboxyl group. Examples of aromatic hydroxycarboxylic acids are parahydroxybenzoic acid, 6-hydroxy-2-naphthalenecarboxylic acid.

The polymer B-2 may be a polycondensate of a mixture of an aromatic hydroxycarboxylic acid and at least one of a polyol and a polycarboxylic acid. In this case, the polyol and the polycarboxylic acid may each independently be an aliphatic or an aromatic having an aromatic ring in the main chain.

The melting point of the polymer B-2 is 180 to 220 °C, preferably 180 to 210 °C, and more preferably 180 to 200 °C.

The melt mass flow rate (MFR (B-2)) of the polymer B-2 measured under conditions of a temperature of 230 °C. and a load of 2.16kgf in accordance with JIS K7210 2014 is preferably 0.1g/10 min or more and 200g/10 min or less. The MFR (B-2) may be 1g/10 min or more, 3g/10 min or more, 5g/10 min or more, 7g/10 min or more, 8g/10 min or more, 10g/10 min or more, or 20g/10 min or more. The MFR (B-2) may be 150g/10 min or more, 100g/10 min or more, or 70g/10 min or less.

### <Composition of Resin Composition>

The resin composition contains 70 to 95 parts by mass of the olefin-based polymer A, 1 to 15 parts by mass of the polymer B-1, and 1 to 25 parts by mass of the polymer B-2, with respect to 100 parts by mass of the total of the olefin-based polymer A, the polymer B-1, and the polymer B-2. The resin composition can contain 80 to 90 parts by mass of the olefin-based polymer A, 1 to 10 parts by mass of the polymer B-1, and 1 to 20 parts by mass of the polymer B-2. The amount of the polymer B-2 may be 2 parts by mass or more, 4 parts by mass or more, 18 parts by mass or less, or 16 parts by mass or less.

The total proportion of the olefin-based polymer A, the polymer B-1, and the polymer B-2 in the entire resin composition can be 50% by mass or more, is preferably 60% by mass or more, and is more preferably 70% by mass or more.

That the resin polymer B-1 forms a dispersed phase means that the resin composition has a sea-island structure in which the olefin-based polymer A is a continuous phase (sea portion) and the polymer B is a dispersed phase (island portion). The average equivalent circle size of the dispersed phase (island portion) can be from 10nm to 400 µ m.

### (Additive)

The resin composition may contain an additive as necessary. The additive may be at least one selected from the group consisting of a stabilizer, an antibacterial agent, an antifungal agent, a dispersant, a plasticizer, a flame retardant, a tackifier, a colorant, a metal powder, an organic powder, an inorganic fiber, an organic fiber, an organic and inorganic composite fiber, an inorganic whisker, and a filler.

Examples of the stabilizer include at least one selected from the group consisting of a lubricant, an anti-aging agent, a heat stabilizer, a light stabilizer, a weathering agent, a metal deactivator, an ultraviolet absorber, a light stabilizer, and a copper inhibitor. An example of the light stabilizer is a hindered amine light stabilizer.

Examples of the colorant include a dye such as an organic dye and at least one selected from the group consisting of titanium oxide, carbon black, and an organic pigment. An example of the metal powder is ferrite.

An example of an organic powder is protein. Examples of inorganic fibers are glass fibers and metal fibers. Examples of organic fibers are carbon fibers and aramid fibers. An example of inorganic whiskers is potassium titanate whiskers.

Examples of the filler include at least one selected from the group consisting of glass beads, glass balloons, glass flakes, asbestos, mica, calcium carbonate, talc, silica, calcium silicate, hydrotalcite, kaolin, diatomaceous earth, graphite, pumice, ebo powder, cotton flock, cork powder, barium sulfate, fluororesin, cellulose powder, and wood powder.

The resin composition may contain only one kind of the above-mentioned additives, or may contain a combination of two or more kinds thereof.

In the resin composition, the additive may be contained in any of the olefin-based polymer A, the polymer B-1, and the polymer B-2. The additive may form a dispersed phase different from the polymers B-1 and B-2 in the continuous phase of the olefin-based polymer A.

### (Method for Producing Resin Composition)

The resin composition described above can be obtained by melt-kneading the olefin-based polymer A, the polymer B-1, the polymer B-2, and an additive added as necessary. The kneading temperature (set temperature of the kneader) is preferably 150 °C to 300 °C, and more preferably 170 °C to 280 °C. Alternatively, a resin composition can be obtained by melt-kneading a part of each of the olefin-based polymer A and the polymers B-1 and B-2 to obtain a pre-kneaded product, subsequently adding the remainder of the olefin-based polymer A and the polymers B-1 and B-2 to the pre-kneaded product, and further melt-kneading the mixture.

### (Method for Producing Molded Article of Resin Composition)

A molded article of the propylene-based composition having a desired shape can be obtained by using a known resin molding method such as an injection molding method, an extrusion molding method, a spinning molding method, a vacuum molding method, an air pressure molding method, a press molding method, a foam molding method, a blow molding method, or a rotational molding method.

In addition, a multilayer structure can be obtained by laminating the above-mentioned resin composition with other materials such as other resins, fibers, metals, paper, leather and the like.

The surface of the molded article of the resin composition of the present invention may be subjected to a surface treatment. Examples of the surface treatment include embossing treatment, corona discharge treatment, flame treatment, plasma treatment, and ozone treatment.

The above resin composition can be widely used as a resin material.

Applications of the resin composition of the present invention include textile materials, exterior structural members, furniture and interior decoration members, home appliance members, toy members, gardening members, automobile members, and packaging materials. Examples of the textile material include clothing fabric members, interior fabric members, and industrial textile members; examples of exterior structural members include car port members, fence members, gate door members, gate pillar members, post members, cycle port members, deck members, sunroom members, roof members, terrace members, handrail members, shade members, and awning members; examples of furniture and interior decoration members include sofa members, table members, chair members, bed members, chest members, cabinet members, and dresser members; examples of home appliance members include clock members, mobile phone members, white home electric appliance members; examples of the toy member include a plastic model member, a diorama member and video game main body members; examples of gardening members include planter members, flower bottle members, and flower pot members; examples of automobile members include bumper members, instrument panel members, and airbag cover members ; and examples of packaging materials include food packaging materials, textile packaging materials, and miscellaneous goods packaging materials. Examples of other applications include monitoring members, office automation (OA) equipment members, medical members, drainage pans, toiletry members, bottles, containers, snow removal article members, and various building members.

### Example

Hereinafter, the present invention will be described using Examples and Comparative Examples. The olefin-based polymers A, B-1 and B-2 used in Examples and Comparative Examples are shown below.
(1) an olefin-based polymer A
   (A-1) a propylene homopolymer
      MFR (230 °C, 2.16kg load): 7g/10 min
      Melting point (Tm): 163 °C.
(2) Polymer B-1
   (B-1-1) poly (3-hydroxybutyrate-co-3-hydroxyhexanoate)
      Structural Formula: (BI-3)
      Content (mol%) of comonomer (3HH): 0.2 mol%
      Weight average molecular weight (Mw): 104000
      MFR (190 °C, 2.16kg load): 7.8g/10 min
      Melting point (Tm): 177 °C.
   (B-1-2) poly (3-hydroxybutyrate-co-4-hydroxybutyrate)
      Structural Formula: (BI-4)
      (trade name) M4300 : manufactured by CJ Cheil-Sugar Manufacturing Co. ltd.
      Content (mol%) of comonomer (4HB): 45 mol%
      Weight average molecular weight (Mw): 216000
      MFR (190 °C, 2.16kg load): 4.0g/10 min
      Melting point (Tm): 48.7 °C
(3) Polymer B-2
   (B-2-1) Aromatic Polyester
      Polycarboxylic acid: terephthalic acid (100mol%)
      Polyol: ethylene glycol (67mol%)
      Polyol: neopentyl glycol (33mol%)
      MFR (230 °C, 2.16kg load): 48g/10 min
      Melting point (Tm): 198 °C
   (B-2-2) Aromatic Polyester
      (trade name) BELL PET EFG70: manufactured by Bell Polyester Products
      Polycarboxylic acid: terephthalic acid
      Polyol: ethylene glycol
      Intrinsic viscosity: 0.75dl/g
      Melting point (Tm): 255 °C.

The physical properties of each polymer and composition were measured according to the following methods.

### (1) Melt mass flow rate (MFR, unit: g/10 min)

The measurement was performed according to the method specified in JIS K7210 2014. The measurement temperature was 230 °C or 190 °C, and the load was 2.16kg.

### (2) a weight average molecular weight (Mw)

The weight average molecular weight (Mw) was calculated based on the measurement result of gel permeation chromatography (GPC). In the GPC measurement, GPC 150C manufactured by Waters Corporation was used as a measurement device, o-dichlorobenzene having a polymer concentration of 0.05% by weight was used, a mixed polystyrene gel column (PSKgelGMH6-HT manufactured by Tosoh Corporation) was used as a column, and a measurement temperature was set to 135 °C.

### (3) a content of a comonomer component of the polymer B-1

The content of the comonomer components is the molar ratio of the structural unit other than 3-hydroxybutyrate (3-hydroxyhexanoate (3HH) or 4-hydroxybutyrate (4HB)) to the total number of ester structural units of the hydroxyalkanoate in the polymer B-1.

The content of the comonomer components was determined by a method using 1H NMR spectra described in L. Tripathi., M. C Factories, 1144 (2012).

### [Measurement Conditions]

Model: Bruker AVANCE600
Probe: 10mm cryoprobe
Measurement temperature: 135 °C
Pulse repetition time: 1 second
Pulse width: 45 °
Number of integrations: 700 times
Magnetic field strength: 600MHz

### (4) melting point (Tm) of the polymer

The measurement was performed in accordance with the method specified in JIS K7121. The measurement temperature was -50 °C to 200 °C or -50 °C to 250 °C, and the temperature rising rate was 10 °C/min.

### (5) dyeing degree

Using a compression molding machine (P-37) manufactured by Niifuji Metallurgical Industry Co., Ltd., the resins were preheated at a temperature of 210 °C for 5 minutes and then pressurized under conditions of a temperature of 210 °C, a pressure of 10MPa, and 5 minutes to obtain molded bodies shaped into a shape of a wide 23mm, a long 43mm, and a thick 50 µm.

An absorption spectrum of the obtained molded body was obtained using a spectrophotometer (UV3150 manufactured by Shimadzu Corporation), and then an integral value (1) of the absorption spectrum in a wave length range of 450 to 650nm was calculated.

Next, 500mL water, 15g organic dye (Mecikron rubine spw manufactured by Jiangsu Dawan), 0.5g polyethylene glycol monooleate, 0.5g glycerol monostearate, and 0.5ml acetate were mixed to prepare a dyeing solution. The dyeing solution was placed in a sealed vessel together with the molded article, sealed, and the molded article was dyed at 110 °C for 40 minutes while stirring with a magnetic stirrer.

Next, 300 mL of water, 0.9g of sodium sulfate, 1.2g of sodium hydroxide, and 0.3g of polyethylene glycol 4000 were mixed together to form a soaping solution, which was then placed in a closed reactor together with the above-described dyed molded article, sealed, and soaped at 70 °C for 20 minutes while stirring with a magnetic stirrer.

An absorption spectrum of the soaping molded article was obtained using a spectrophotometer (UV3150 manufactured by Shimadzu Corporation), and then an integral value (2) of the absorption spectrum in a wave length range of 450 to 650nm was calculated.

The dyeing degree was obtained from the following formula (3) using the integral value (1) of the obtained absorption spectrum, the integral value (2) of the obtained absorption spectrum, and the thickness of the molded article. Dyeing degree = {[integral value (2) of 450 to 650nm in absorption spectrum of molded article after soaping] - [integral value (1) of 450 to 650nm in absorption spectrum of molded article]} / thickness of molded article (µm)

The larger the value, the better the dyeability.

### (6) Density (g/cm3)

The densities of the resinous compositions were determined according to Method A in the method specified in JISK7112-1999.

### (Example 1)

85% by mass of the polymer (A-1), 5% by mass of the polymer (B-1-1), and 10% by mass of the polymer (B-2-1) were uniformly mixed in a powder state, and then fed to a small kneader (Xplore ; manufactured by DSM) and kneaded under conditions of a temperature of 190 °C, a kneading time of 4 minutes, and a screw rotation speed of 100rpm to obtain a resin composition. The dyeing degree and density of the resin composition were evaluated.

### (Example 2)

The same procedure as in Example 1 was performed except that 82% by mass of the polymer (A-1), 8% by mass of the polymer (B-1-1), and 10% by mass of the polymer (B-2-1) were used.

### (Example 3)

The same procedure as in Example 1 was performed except that 70% by mass of the polymer (A-1), 5% by mass of the polymer (B-1-1), and 25% by mass of the polymer (B-2-1) were used.

### (Comparative Example 1)

The same procedure as in Example 1 was carried out except that 100% by mass of the polymer (A-1) was used alone.

### (Comparative Example 2)

The same procedure as in Example 1 was performed except that 85% by mass of the polymer (A-1) and 15% by mass of the polymer (B-1-1) were used.

### (Comparative Example 3)

The same procedure as in Example 1 was performed except that 85% by mass of the polymer (A-1) and 15% by mass of the polymer (B-2-1) were used.

### (Comparative Example 4)

The same procedure as in Example 1 was performed except that 85% by mass of the polymer (A-1), 5% by mass of the polymer (B-1-2), and 10% by mass of the polymer (B-2-1) were used.

### (Comparative Example 5)

The same procedure as in Example 1 was carried out except that 85% by mass of the polymer (A-1), 5% by mass of the polymer (B-1-1), and 10% by mass of the polymer (B-2-2) were used, and the resin temperature during kneading was 230 °C.

The conditions and results are shown in Table 1.

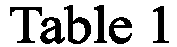

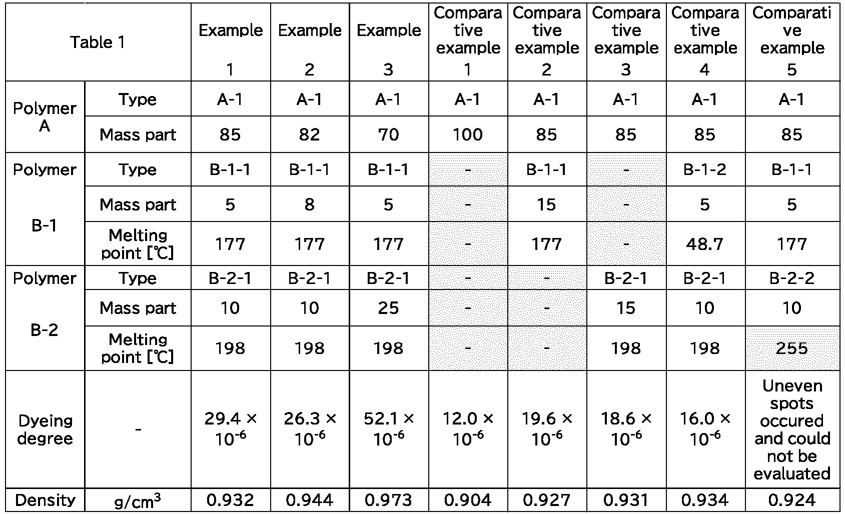

## Claims

1. A resin composition comprising an olefin-based polymer A, a polymer B-1, and a polymer B-2,
wherein the polymer B-1 is a poly (3-hydroxyalkanoate) - based polymer having a melting point of 150 to 220 °C,
the polymer B-2 is an aromatic polyester having a melting point of 180 to 220 °C, and
a content of the olefin-based polymer A is 70 to 95 parts by mass, a content of the polymer B-1 is 1 to 15 parts by mass, and a content of the polymer B-2 is 1 to 25 parts by mass, with respect to a total of 100 parts by mass of the olefin-based polymer A, the polymer B-1, and the polymer B-2.

2. The resin composition according to claim 1, wherein the content of the olefin-based polymer A is 80 to 90 parts by mass, the content of the polymer B-1 is 1 to 10 parts by mass, and the content of the polymer B-2 is 1 to 20 parts by mass, with respect to 100 parts by mass of the total of the olefin-based polymer A, the polymer B-1, and the polymer B-2.

3. The resin composition according to claim 1 or 2, wherein the olefin-based polymer A is a propylene homopolymer.

4. The resin composition according to any one of claims 1 to 3, wherein the polymer B-1 comprises a structural unit of 3-hydroxybutyrate.

5. The resin composition according to any one of claims 1 to 4, wherein the polymer B-1 comprises a structural unit of 3-hydroxybutyrate in an amount of 50 mol% or more with respect to total structural units (100 mol%) of hydroxyalkanoate.
